(19) Europäisches Patentamt
European Patent Office
Office européen des brevets

(11) **EP 4 253 303 A1**

(12) **EUROPEAN PATENT APPLICATION**
published in accordance with Art. 153(4) EPC

(43) Date of publication:
04.10.2023 Bulletin 2023/40

(21) Application number: **21897422.8**

(22) Date of filing: **23.08.2021**

(51) International Patent Classification (IPC):
**B66C 13/48** $^{(2006.01)}$

(52) Cooperative Patent Classification (CPC):
**B66C 13/48**

(86) International application number:
**PCT/JP2021/030820**

(87) International publication number:
**WO 2022/113444 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.11.2020 JP 2020197895**

(71) Applicant: **JFE Steel Corporation
Tokyo 100-0011 (JP)**

(72) Inventors:
• **TAKAKI Yuki
Tokyo 100-0011 (JP)**
• **YOSHINARI Yusuke
Tokyo 100-0011 (JP)**
• **YAMAGUCHI Osamu
Tokyo 100-0011 (JP)**

(74) Representative: **Hoffmann Eitle
Patent- und Rechtsanwälte PartmbB
Arabellastraße 30
81925 München (DE)**

(54) **METHOD FOR GENERATING CARGO HANDLING TRANSPORT PATH, CARGO HANDLING TRANSPORT CRANE, AND CARGO HANDLING TRANSPORT METHOD**

(57) There are provided a method for generating a cargo handling transport path which makes it possible to transport a suspended cargo in a short time from an optional cargo handling initial position to an optional cargo handling target position by a cargo handling transport crane (1), the cargo handling transport crane (1), and a cargo handling transport method. A method for generating a cargo handling transport path for generating a cargo handling transport path for transporting a suspended cargo (7) suspended from an arm tip portion of a crane arm (2) from an optional cargo handling initial position to an optional cargo handling target position by swinging movement of the crane arm (2), and the method includes: calculating the cargo handling transport path and a cargo handling transport velocity for transporting the suspended cargo in a straight line track as viewed from at least the vertical direction in at least a part of the cargo handling transport path based on the cargo handling initial position, the cargo handling target position, the range of the arm minimum swinging circle of the crane arm (2), the upper limit swinging angular velocity of the crane arm (2), the upper limit swinging angular acceleration of the crane arm (2), the upper limit luffing velocity of the crane arm (2), and the upper limit luffing acceleration of the crane arm (2).

FIG. 9

```
              START
                │
   SET TEMPORARY MAXIMUM VELOCITY ──── S300
                │
   CALCULATE MAXIMUM VALUES OF SWINGING
   ANGULAR VELOCITY, SWINGING ANGULAR ──── S302
   ACCELERATION, LUFFING VELOCITY,
   AND LUFFING ACCELERATION
                │
   CALCULATE RATIOS OF MAXIMUM VALUES AND
   UPPER LIMITS OF SWINGING
   ANGULAR VELOCITY, SWINGING ANGULAR ──── S304
   ACCELERATION, LUFFING VELOCITY,
   AND LUFFING ACCELERATION, AND CALCULATE $\alpha_{max}$
                │
   DIVIDE TEMPORARY
   MAXIMUM VELOCITY BY $\alpha_{max}$ ──── S306
                │
         $\alpha_{max}$ HAS CONVERGED? ──── S308  N
                │ Y
   SET TEMPORARY MAXIMUM VELOCITY ──── S310
   AS MAXIMUM VELOCITY
                │
              END
```

Processed by Luminess, 75001 PARIS (FR)

EP 4 253 303 A1

**Description**

Technical Field

The present invention relates to a method for generating a cargo handling transport path, a cargo handling transport crane, and a cargo handling transport method.

Background Art

For example, when products, such as coils, are shipped from steel works, the transport is performed using a swinging cargo handling transport crane. This work is performed by a land-side worker performing slinging, a crane operator operating the crane, and a shipboard worker aligning and lashing the coils in the ship, so that the work requires manpower. Therefore, considering the future decline in the working population, there is a need for labor saving.

As a labor saving method for the swinging cargo handling transport crane, automating crane operations is mentioned. To automate crane operations, there is a necessity of automatically calculating a cargo handling transport path from a cargo handling initial position, which is the current position of a suspended cargo, and a cargo handling target position, which is a transport destination of the suspended cargo. As a method therefor, a method has been conventionally taken which includes controlling the swinging of a swinging body and the luffing of a jib of a tower crane (cargo handling transport crane) and transporting the suspended cargo in a straight line track having the shortest distance (PTL 1).

Citation List

Patent Literature

PTL 1: JP 2019-112178 A

Summary of Invention

Technical Problem

In the method described in PTL 1, there is no description regarding the maximum velocity during the suspended cargo transport. However, the maximum velocity changes depending on the swinging radius in the middle of the path or the like, and therefore it has been difficult to set the maximum velocity according to the cargo handling transport path.

Further, in the method described in PTL 1, the transport distance is the shortest because the suspended cargo is transported in the straight line track. However, the cargo handling transport crane has the minimum swinging radius due to the facility structure. Therefore, when the cargo handling initial position and the cargo handling target position are connected by a straight line path, a non-transportable route is sometimes generated in which the swinging radius of the cargo handling transport crane falls below the lower limit in the facility constraints (i.e., equal to or less than the minimum swinging radius) in the middle of the transfer. For example, when the cargo handling initial position and the cargo handling target position of the suspended cargo are located at positions almost directly opposite each other across the cargo handling transport crane, for example, a non-transportable route is generated in which the swinging radius of the cargo handling transport crane falls below the lower limit in the facility constraints in the middle of the transfer.

Thus, the present invention has been made focusing on the above-described problem. It is an object of the present invention to provide a method for generating a cargo handling transport path which makes it possible to transport the suspended cargo in a short time from the optional cargo handling initial position to the optional cargo handling target position by the cargo handling transport crane, a cargo handling transport crane, and a cargo handling transport method.

Solution to Problem

One aspect of the present invention provides a method for generating a cargo handling transport path for generating a cargo handling transport path for transporting a suspended cargo suspended from an arm tip portion of a crane arm from an optional cargo handling initial position to an optional cargo handling target position by swinging movement of the crane arm, and the method includes: calculating the cargo handling transport path and a cargo handling transport velocity for transporting the suspended cargo in a straight line track as viewed from at least the vertical direction in at least a part of the cargo handling transport path based on the cargo handling initial position, the cargo handling target position, the range of the arm minimum swinging circle of the crane arm, the upper limit swinging angular velocity of the crane arm, the upper limit swinging angular acceleration of the crane arm, the upper limit luffing velocity of the

2

crane arm, and the upper limit luffing acceleration of the crane arm.

One aspect of the present invention provides a cargo handling transport crane including: a crane arm configured to be able to perform swinging movement and have an arm tip portion from which a suspended cargo is suspended; an arm swinging mechanism configured to swing the crane arm; an arm luffing mechanism configured to adjust the luffing angle of the crane arm; and a control device configured to control the arm swinging mechanism and the arm luffing mechanism such that a track of the suspended cargo is a straight line track as viewed from at least the vertical direction in at least a part of a cargo handling transport path, in which the control device generates the cargo handling transport path and a cargo handling transport velocity using the method for generating a cargo handling transport path described in any one of claims 1 to 4, and transports the suspended cargo based on the cargo handling transport path.

One aspect of the present invention provides a cargo handling transport method including: transporting a suspended cargo using the cargo handling transport crane.

Advantageous Effects of Invention

One aspect of the present invention provides a method for generating a cargo handling transport path which makes it possible to transport a suspended cargo in a short time from an optional cargo handling initial position to an optional cargo handling target position by a cargo handling transport crane, the cargo handling transport crane, and a cargo handling transport method.

Brief Description of Drawings

FIG. 1 is a side view illustrating a cargo handling transport crane according to one embodiment of the present invention;
FIG. 2 is a plane view illustrating the cargo handling transport crane according to one embodiment of the present invention;
FIG. 3 is an explanatory view illustrating the cargo handling range of the cargo handling transport crane;
FIG. 4A and 4B are graphs illustrating an acceleration pattern and a velocity pattern, respectively, of steady rest control, in which FIG. 4A illustrates the acceleration velocity pattern and FIG. 4B illustrates the velocity pattern;
FIG. 5 is a flow chart illustrating a method for generating a cargo handling transport path according to one embodiment of the present invention;
FIG. 6 is an explanatory view illustrating the relationship between a first transport path and an arm minimum swinging circle;
FIG. 7 is a flow chart illustrating a method for generating a relay point and a second transport path;
FIG. 8 is an explanatory view illustrating one example of the second transport path;
FIG. 9 is a flow chart illustrating a method for calculating the maximum velocity;
FIG. 10 is a graph illustrating a modification of the acceleration pattern of the steady rest control;
FIG. 11 is a graph illustrating a modification of the velocity pattern of the steady rest control;
FIG. 12 is an explanatory view illustrating a cargo handling transport path in Example 1;
FIG. 13 is a graph illustrating the swinging angular velocity result in Example 1;
FIG. 14 is a graph illustrating the swinging angular acceleration result in Example 1;
FIG. 15 is a graph illustrating the retracting velocity result in Example 1;
FIG. 16 is a graph illustrating the retracting acceleration result in Example 1;
FIG. 17 is an explanatory view illustrating a cargo handling transport path in Example 2;
FIG. 18 is a graph illustrating the swinging angular velocity result in Example 2;
FIG. 19 is a graph illustrating the swinging angular acceleration result in Example 2;
FIG. 20 is a graph illustrating the retracting velocity result in Example 2; and
FIG. 21 is a graph illustrating the retracting acceleration result in Example 2.

Description of Embodiments

A detailed description below describes an embodiment of the present invention with reference to the drawings. In the description of the drawings, the same or similar reference numerals are attached to the same or similar parts, and duplicated descriptions are omitted. The drawings are schematic and are sometimes different from the actual ones. The embodiment described below exemplifies devices and methods for embodying the technical idea of the present invention. The technical idea of the present invention does not specify materials, structures, arrangement, and the like of constituent components to the materials, structures, arrangement, and the like described below. The technical idea of the present invention can be variously altered within the technical range defined by Claims.

<Cargo handling transport crane>

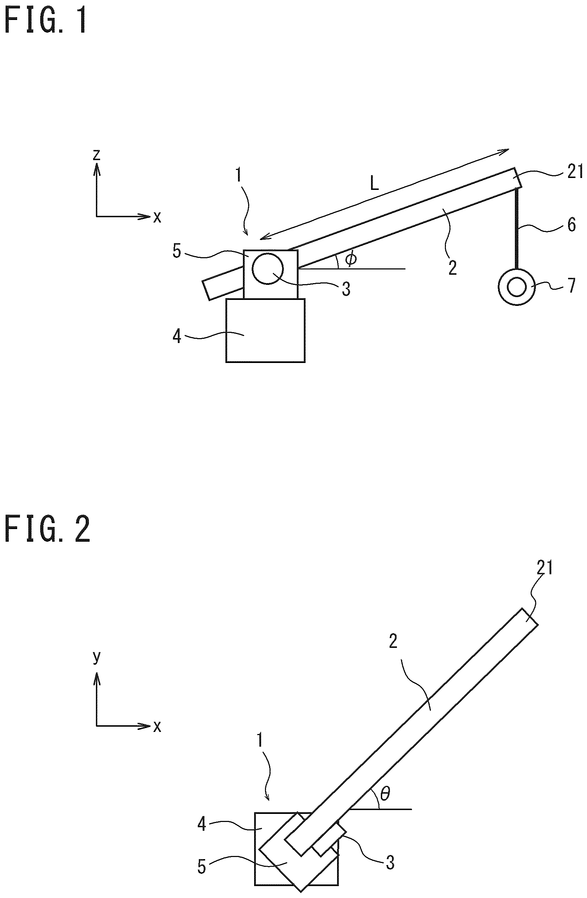

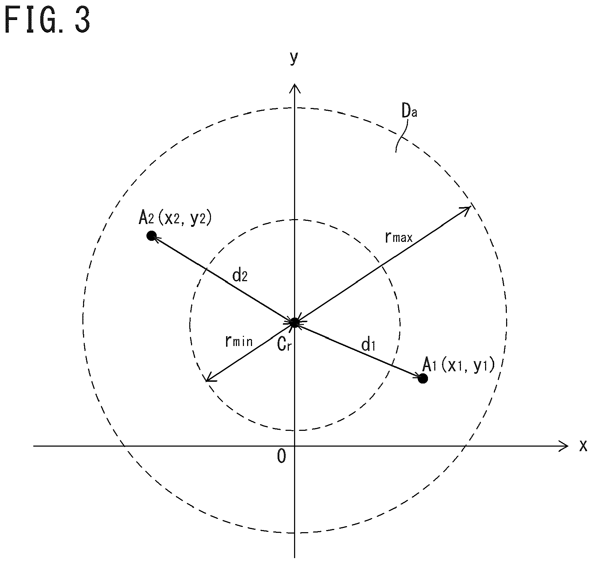

A cargo handling transport crane 1 according to one embodiment of the present invention is described. The cargo handling transport crane 1 includes a crane arm 2 capable of performing swinging movement, an arm luffing mechanism 3, an arm swinging mechanism 4, an arm extension mechanism 5, and a wire 6 as illustrated in FIGS. 1 and 2. The tip to which the wire 6 is attached of the crane arm 2 is also referred to as an arm tip portion 21. In the drawings, the x-axis, y-axis, and the z-axis are axes orthogonal to each other, the x-axis and the y-axis are axes parallel to the horizontal direction, and the z-axis is an axis parallel to the vertical direction. The cargo handling transport crane 1 lifts a suspended cargo 7 attached to the tip of the wire 6 and transports the same from a cargo handling initial position $A_1$ to a cargo handling target position $A_2$. As illustrated in FIG. 3, the coordinates of the cargo handling initial position $A_1$ are $(x_1, y_1)$ [unit: m], and the coordinates of the cargo handling target position $A_2$ are $(x_2, y_2)$ [unit: m]. In this embodiment, the suspended cargo 7 is a coil that is a product manufactured in steel works as one example.

The arm luffing mechanism 3 adjusts a luffing angle $\varphi$ [deg], which is the angle in the extension direction of the crane arm 2 with respect to the horizontal direction. The arm swinging mechanism 4 adjusts a swinging angle $\theta$ [deg], which is the angle in the extension direction of the crane arm 2 with respect to the x-axis direction, by swinging the crane arm 2. The arm extension mechanism 5 adjusts an arm length L [m], which is the projection length in the extension direction of the crane arm 2 from the supporting position of the crane arm 2 provided with the arm swinging mechanism 4. The cargo handling transport crane 1 may not include the arm extension mechanism 5.

The cargo handling transport crane 1 is further provided with a hoisting device (not illustrated) adjusting the wire length from the arm tip portion 21 of the wire 6. Further, the cargo handling transport crane 1 is provided with a control device (not illustrated) controlling the arm luffing mechanism 3, the arm swinging mechanism 4, the arm extension mechanism 5, and the hoisting device and adjusting the luffing angle $\varphi$, the swinging angle $\theta$, the arm length L, and the wire length to transport the suspended cargo 7 from the cargo handling initial position $A_1$ to the cargo handling target position $A_2$. The control device generates a cargo handling transport path which is a track of the suspended cargo 7 according to the cargo handling initial position, the cargo handling target position, and the swinging radius of the cargo handling transport crane 1. Details of a method for generating the cargo handling transport path by the control device are described later. Thereafter, the control device arithmetically operates the swinging angle $\theta$, the luffing angle $\varphi$, and the arm length L of the crane arm 2 such that the track of the suspended cargo 7 is the generated cargo handling transport path using the generated cargo handling transport path, a maximum velocity $v_{max}$ [m/s] of the arm tip portion 21, a suspended cargo swing cycle T [s], and a rise time $T_1$ [s]. Then, the control device controls the arm swinging mechanism 4, the arm luffing mechanism 3, and the arm extension mechanism 5 such that the arithmetically operated swinging angle $\theta$, luffing angle $\varphi$, and arm length L are achieved, thereby transporting the suspended cargo 7. Details of a method for stopping the swing of the cargo handling transport crane 1 by the control device are described below.

As illustrated in FIG. 3 viewed from above in the vertical direction, a cargo handling range $D_a$ in which the suspended cargo 7 can be transported of the cargo handling transport crane 1 is an annular range equal to or larger than a minimum swinging radius $r_{min}$ [m] and within a maximum swinging radius $r_{max}$ [m] around a swinging center $C_r$ (point $C_r$). More specifically, the transport of the suspended cargo 7 by the cargo handling transport crane 1 cannot be performed in a region outside the cargo handling range $D_a$ (position where the distance from the swinging center $C_r$ is less than the minimum swinging radius $r_{min}$ or larger than the maximum swinging radius $r_{max}$). Herein, in this embodiment, the cargo handling transport path of the cargo handling transport crane 1 is considered in a plane view viewed from the vertical direction as illustrated in FIG. 3. In this plane, the axes parallel to the horizontal plane and orthogonal to each other are defined as the x-axis and the y-axis, and the position through which the suspended cargo 7 passes is expressed by the x-y coordinates.

<Cargo handling transport method>

According to the cargo handling transport method of this embodiment, the suspended cargo 7 is transported in the cargo handling transport path determined by a method for generating a cargo handling transport path described later using the cargo handling transport crane 1. Further, in addition to the generation of the cargo handling transport path, the maximum velocity of the arm tip portion 21 during steady rest transport is also calculated. The suspended cargo is transported at the cargo handling transport velocity of a velocity pattern in which the steady rest control is performed according to the maximum velocity.

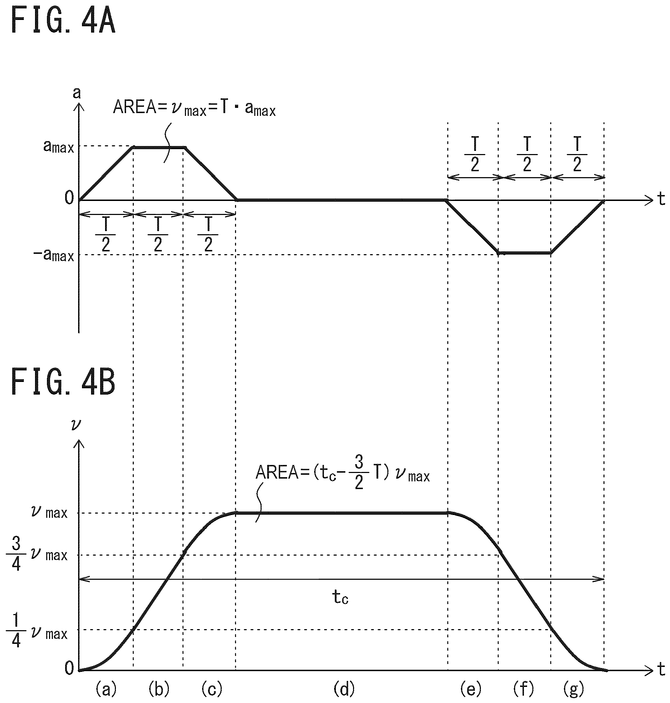

As the velocity pattern of the steady rest control, the velocity pattern described in "Automation of Overhead Traveling Cranes, Okawa et al., NKK Technical Report, edited by Nippon Kokan Techno Service Co., Ltd., 1995, No. 149" is applicable, for example. Specifically, the velocity v [m/s] of the arm tip portion 21 of the crane arm is controlled with the velocity and acceleration patterns illustrated in FIGS. 4A and 4B, respectively. In the patterns illustrated in FIGS.

4A and 4B, the transport period is divided into 7 sections of (a) to (g) in a linear transport path, and the velocities represented by Expressions (1) to (7) below according to an elapsed time t [s] from the start of the transport are set. $v_{max}$ indicates the maximum velocity [m/s], and $t_c$ indicates a transport time [s] of the suspended cargo. An area (= $T \cdot a_{max}$) in the period of $0 \le t \le (3/2)T$ in FIG. 4A is $v_{max}$. An area (= $(t_c-(3/2)T)v_{max}$) in the period of $0 \le t \le t_c$ in FIG. 4B is the transport distance of the suspended cargo.

[Expression 1]

$$v = \frac{v_{max}}{T^2} t^2 \cdots (1)$$

$$v = \frac{v_{max}}{T}\left(t - \frac{1}{2}T\right) + \frac{1}{4} v_{max} \cdots (2)$$

$$v = -\frac{v_{max}}{T^2}\left(t - \frac{3}{2}T\right)^2 + v_{max} \cdots (3)$$

$$v = v_{max} \cdots (4)$$

$$v = -\frac{v_{max}}{T^2}\left(t - t_c + \frac{3}{2}T\right)^2 + v_{max} \cdots (5)$$

$$v = -\frac{v_{max}}{T}\left(t - t_c + \frac{1}{2}T\right) + \frac{1}{4} v_{max} \cdots (6)$$

$$v = \frac{v_{max}}{T^2}(t - t_c)^2 \cdots (7)$$

<Method for generating cargo handling transport path>

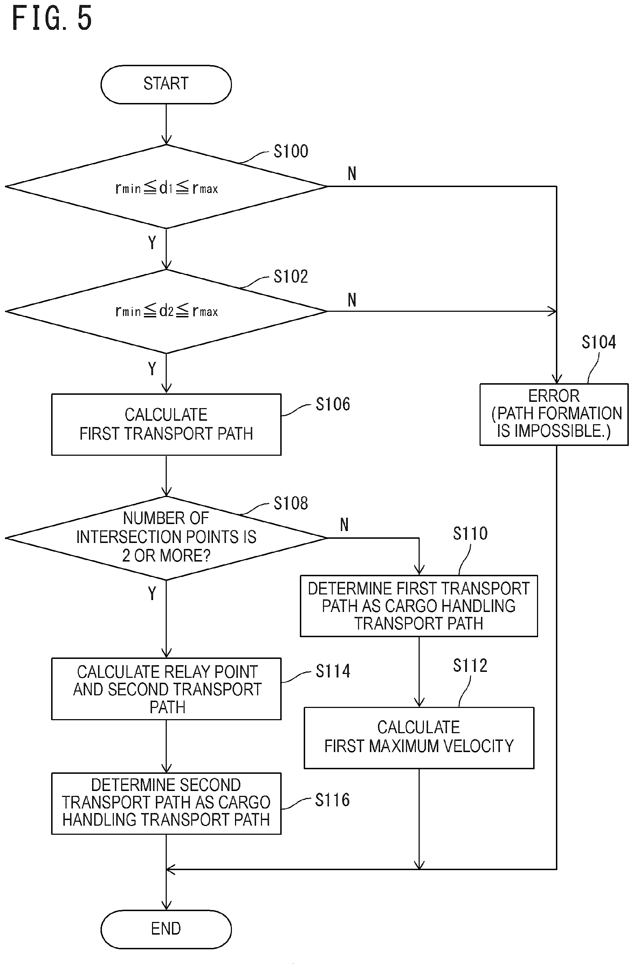

The method for generating a cargo handling transport path according to this embodiment by the control device is described with reference to FIGS. 3, 5. In this embodiment, it is first determined whether a first distance $d_1$ [m] between the swinging center $C_r$ of the cargo handling transport crane 1 and the cargo handling initial position $A_1$ is equal to or larger than the minimum swinging radius $r_{min}$ of the cargo handling transport crane 1 and within the maximum swinging radius $r_{max}$ of the cargo handling transport crane 1 (S100). In step S100, it may be determined whether the cargo handling initial position $A_1$ falls within the cargo handling range $D_a$, instead of the determination described above.

In Step S100, when the first distance $d_1$ is equal to or larger than the minimum swinging radius $r_{min}$ and within the maximum swinging radius $r_{max}$, it is determined whether a second distance $d_2$ [m] between the swinging center $C_r$ of the cargo handling transport crane 1 and the cargo handling target position $A_2$ is equal to or larger than the minimum swinging radius $r_{min}$ of the cargo handling transport crane and within the maximum swinging radius $r_{max}$ of the cargo handling transport crane 1 (S102). In Step S102, it may be determined whether the cargo handling target position $A_2$ falls within the cargo handling range $D_a$, instead of the determination described above.

In Step S100, when the first distance $d_1$ is less than the minimum swinging radius $r_{min}$ or larger than the maximum swinging radius $r_{max}$ or when the second distance $d_2$ is less than the minimum swinging radius $r_{min}$ or larger than the maximum swinging radius $r_{max}$, an error is issued, and the processing of generating the cargo handling transport path ends (S104). When Step S104 is processed, a situation occurs in which at least one of the current cargo handling initial position $A_1$ and cargo handling target position $A_2$ cannot be accessed from the cargo handling transport crane 1. This makes it impossible to form a cargo handling transport path having the current cargo handling initial position $A_1$ and cargo handling target position $A_2$.

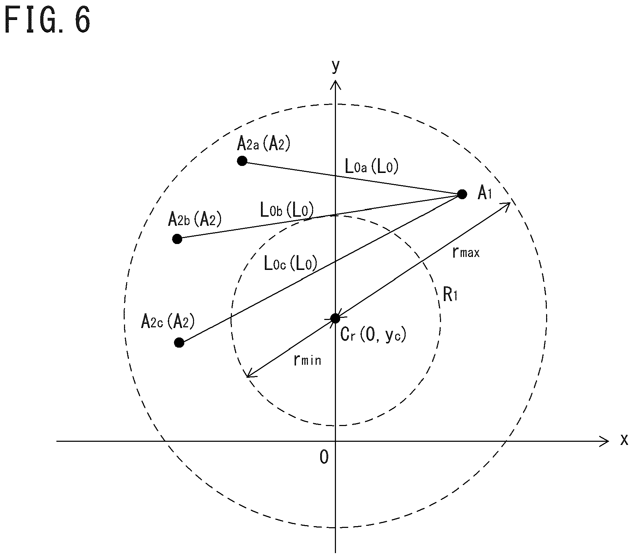

In Step S102, when the second distance $d_2$ is equal to or larger than the minimum swinging radius $r_{min}$ and within the maximum swinging radius $r_{max}$, a linear path (straight ling $L_0$) connecting the cargo handling initial position $A_1$ and the cargo handling target position $A_2$ is calculated as the first transport path as illustrated in FIG. 6 (S106). In Step S106, the first transport path is a straight line track represented by Expression (11) below. In Expression (1), x and y indicate the x-coordinate and the y-coordinate, respectively, of the arm tip portion 21 of the crane arm 2.

[Expression 2]

$$y = \frac{y_2 - y_1}{x_2 - x_1}x + y_1 - \frac{y_2 - y_1}{x_2 - x_1}x_1 \quad \cdots (11)$$

After Step S106, it is determined whether the number of intersection points between a circle $R_1$ in which the radius around the swinging center $C_r$ is the minimum swinging radius $r_{min}$ and a straight line $L_0$ is 2 or more (S108). The circle $R_1$ is represented by Expression (12) below. The circle $R_1$ is also referred to as an arm minimum swinging circle of the crane arm 2. More specifically, in Step S108, when the discriminant of Expression (13) (Expression (14)) obtained by substituting Expression (12) into Expression (11) takes a positive value, the number of the intersection points is determined to be 2 or more, otherwise the number of the intersection points is determined to be less than 2. In this embodiment, the coordinates of the swinging center point $C_r$ are $(0, y_c)$.

[Expression 3]

$$x^2 + (y - y_c)^2 = r_{min}^2 \quad \cdots (12)$$

$$(A^2 + 1)x^2 + 2A(y_1 - Ax_1 - y_c)x + (y_1 - Ax_1 - y_c)^2 - r_{min}^2 = 0 \quad \cdots (13)$$

$$D/4 = (A^2 + 1)r_{min}^2 - (y_1 - Ax_1 - y_c)^2 \quad \cdots (14)$$

As a result of the determination in Step S108, when the number of the intersection points is determined to be 1 or less, it is determined that the first transport path falls within the cargo handling range of the cargo handling transport crane 1, and the first transport path is adopted as the final cargo handling transport path. (S110). For example, when the cargo handling target positions in FIG. 6 are $A_{2a}$, $A_{2b}$, the number of the intersection points between the circle $R_1$ and the straight line $L_0$ ($L_{0a}$, $L_{0b}$) is 1 or less.

After Step S110, a first maximum velocity $v_{max1}$ [m/s] is calculated, which is the maximum velocity of the arm tip portion 21 during the steady rest transport in a path from the cargo handling initial position $A_1$ to the cargo handling target position $A_2$ (S112). A method for calculating the maximum velocity of the arm tip portion 21 during the steady rest transport is described later.

On the other hand, when it is determined that the number of the intersection points is 2 or more as the result of the determination in Step S108, a relay point $A_3$ is calculated (S114). For example, when the cargo handling target position in FIG. 6 is $A_{2c}$, the number of the intersection points between the circle $R_1$ and the straight line $L_0$ ($L_{0c}$) is 2. A method for calculating the relay point $A_3$ is described later.

After Step S114, a second transport path, which is a transport route passing through the relay point $A_3$, is determined as the final cargo handling transport path (S116). Further, in Step S116, the maximum velocities of the arm tip portion 21 during the steady rest transport in the second transport path (second maximum velocity $v_{max2}$ and third maximum velocity $v_{max3}$ described later) are calculated as described later.

By the steps described above, the cargo handling transport path and the maximum velocity of the arm tip portion 21 during the steady rest transport are generated.

(Method for generating relay point and second transport path)

The relay point $A_3$ is a point where the transport time from the cargo handling initial position to the cargo handling target position is the shortest, and is determined as follows.

When the coordinates of the relay point $A_3$ are $(x_3, y_3)$, a transport time $t_c$ from the cargo handling initial position $A_1$ to the cargo handling target position $A_2$ is represented by Expression (15) using the coordinates of the points $A_1$ to $A_3$, the second maximum velocity $v_{max2}$ [m/s], which is the maximum velocity of the arm tip portion 21 during the steady rest transport in a path from the cargo handling initial position $A_1$ to the relay point $A_3$, the third maximum velocity $v_{max3}$ [m/s], which is the maximum velocity of the arm tip portion 21 during the steady rest transport in a path from the relay point $A_3$ to the cargo handling target position $A_2$, and the swing cycle T [s] of the suspended cargo. The swing cycle T is defined by Expression (16) below. In Expression (16), l is the length [m] of the wire 6 and G is the gravitational acceleration [m/s$^2$].

[Expression 4]

$$t_c = \frac{\sqrt{(x_3-x_1)^2+(y_3-y_1)^2}}{v_{max2}} + \frac{\sqrt{(x_2-x_3)^2+(y_2-y_3)^2}}{v_{max3}} + 3T \cdot\cdot\cdot(15)$$

$$T = 2\pi\sqrt{\frac{l}{G}} \cdot\cdot\cdot(16)$$

To reduce the transport time $t_c$ represented by Expression (15), it is important to increase the second maximum velocity $v_{max2}$ and the third maximum velocity $v_{max3}$ of the arm tip portion 21 of the crane arm 2 as much as possible and to minimize the distance between the cargo handling initial position $A_1$ and the relay point $A_3$ and the distance between the relay point $A_3$ and the cargo handling target position $A_2$ as much as possible. However, these two conditions are incompatible and have a trade-off relationship.

First, the second maximum velocity $v_{max3}$ and the third maximum velocity $v_{max3}$ are affected by the facility constraints of the crane, such as the swinging angular velocity, the swinging angular acceleration, the luffing velocity, and the luffing acceleration of the crane arm. With respect to the swinging angular velocity among the above, even in the case of the same upper limit value, when the swinging radius in the middle of the path increases, the second maximum velocity $v_{max2}$ and the third maximum velocity $v_{max3}$ at the arm tip portion 21 can be proportionally increased, which is advantageous.

On the other hand, with respect to the distance between the cargo handling initial position $A_1$ and the relay point $A_3$ and the distance between the relay point $A_3$ and the cargo handling target position $A_2$, a smaller swinging radius in the middle of the path is advantageous because the path is closer to the shortest path.

When the position of the relay point $A_3$ is changed to positions other than the above, the transport time $t_c$ changes in a complicated manner due to the change in the swinging radius in the middle of the path, and thus it is difficult to analytically determine the same. Therefore, as a search problem, the relay point $A_3$ where a transport time $T_s$ is the shortest is derived.

As a specific technique, a particle swarm optimization method is applied, which includes arranging particle swarms and searching for a solution for minimizing an objective function by iterative calculations.

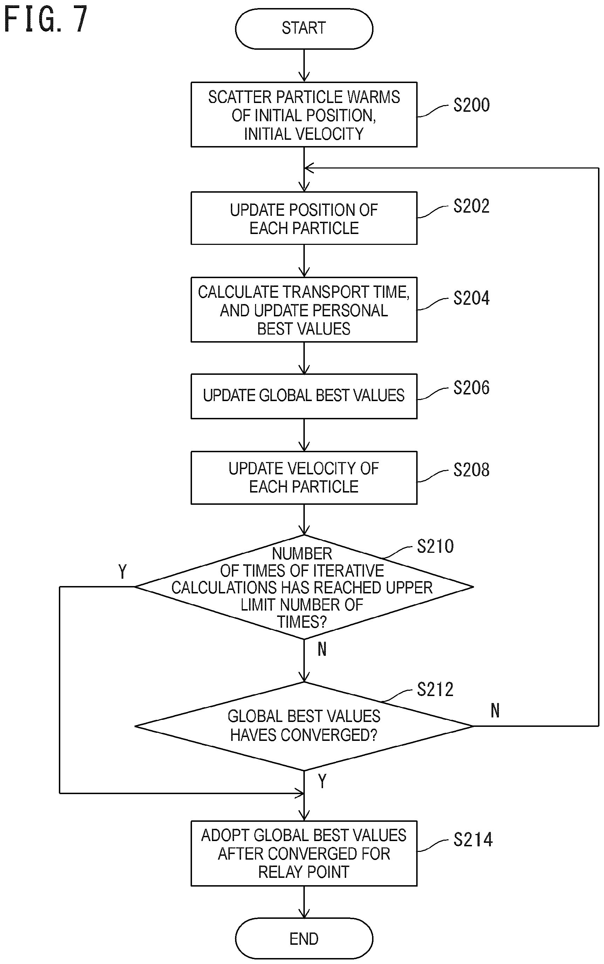

FIG. 7 illustrates one example of a method for deriving the relay point using the particle swarm optimization method.

In the particle swarm optimization method illustrated in FIG. 7, first, N particle swarms having an initial position $(x_i, y_i)$ and an initial velocity $(v_{xi}, v_{yi})$ (i = 1 to N (N is a natural number equal to or larger than 2) are scatted in a search area as candidates for the relay point $A_3$ with respect to the cargo handling initial position $A_1$ and the cargo handling target position $A_2$ (S200). Further, in Step S200, a transport time $t_{ci}$ is calculated from the maximum second velocity $v_{max2}$ and the maximum third velocity $v_{max3}$ which can be taken for each of the scattered particles, and the values of the position and the transport time are recorded as personal best values $(x_{pi}, y_{bi}, t_{cpi})$ for each particle. Further, in Step S200, the position and the transport time of a particle having the shortest transport time among all the particles are recorded as global best values $(x_g, y_g, t_{cg})$.

After Step S200, the position of each particle is updated according to Expression (17) and Expression (18) below (S202).
[Expression 5]

$$x_i(t+1) = x_i(t) + v_{xi}(t) \cdot\cdot\cdot(17)$$

$$y_i(t+1) = y_i(t) + v_{yi}(t) \cdot\cdot\cdot(18)$$

After Step S202, when the transport time $t_{ci}$ is calculated from the maximum second maximum velocity $v_{max2}$ and the third maximum velocity $v_{max3}$ which can be taken for each particle, and then compared with the personal best value $t_{cpi}$, resulting in $t_{ci} < t_{cpi}$, the $(x_{pi}, y_{pi}, t_{cpi})$ values are updated with the current value as the personal best values (S204).

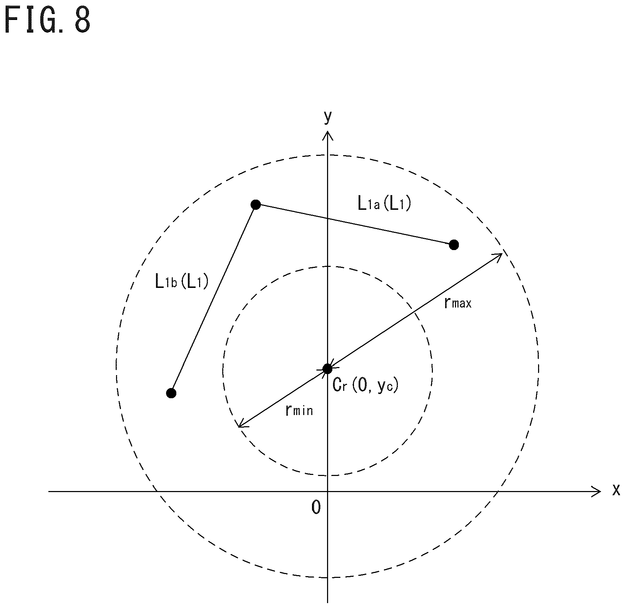

Further, when there is $t_{cpi}$ satisfying $t_{cpi} < t_{cg}$, the $(x_g, y_g, t_{cg})$ values are updated with the values as the global best values (S206). In Step S206, when there is no $t_{cpi}$ satisfying $t_{cpi} < t_{cg}$, the global best values are not updated and the recorded global best values are maintained. A method for deriving the second maximum velocity $v_{max2}$ and the third maximum velocity $v_{max3}$ is described later using FIG. 8.

After Step S206, the velocities $(v_{xi}, v_{yi})$ of each particle are updated according to Expressions (19) and (20) below using constants $c_1$, $c_2$, w (S208).
[Expression 6]

$$v_{xi}(t+1) = wv_{xi}(t) + c_1\left(x_{pi}(t+1) - x_i(t+1)\right) + c_2\left(x_g(t+1) - x_i(t+1)\right) \cdots (19)$$

$$v_{yi}(t+1) = wv_{yi}(t) + c_1\left(y_{pi}(t+1) - y_i(t+1)\right) + c_2\left(y_g(t+1) - y_i(t+1)\right) \cdots (20)$$

After Step S208, it is determined whether the number of times of the iterative calculations from Steps S202 to S208 has reached the upper limit number of times (S210). In this embodiment, the calculations in Steps S202 to S208 are repeatedly performed as described later. In the example illustrated in FIG. 7, the upper limit number of times is not particularly limited, but may be set to about 400 times.

When the number of times of the iterative calculations has not reached the upper limit number of times in the determination in Step S210, it is determined whether the global best values have converged (S212). The determination of whether the global best values have converged may be performed by determining that the global best values have converged when the global best values obtained in the calculations in Steps S202 to S208 iteratively performed do not change, for example. The determination of whether the global best values have converged may be performed by determining that the global best values have converged when the change amount of the global best values obtained by the iterative calculations is equal to or less than a predetermined threshold, for example.

When the global best values have not converged in the determination in Step S212, the steps in and after Step S202 are performed again. In the step of Step S202 on and after the second time, the personal best values of each particle obtained in the previous Step S206 are used as the initial position and the initial velocity.

When the number of times of the iterative calculations has reached the upper limit number of times in the determination in Step S210 or when the global best values have converged in the determination in Step S212, a relay point having the finally obtained global best values is determined as the relay point $A_3$ of the transport path (S214). In Step S214, the second transport path, which is a transport path from the cargo handling initial position $A_1$ to the cargo handling target position $A_2$ and passes through the relay point $A_3$, is determined. In this case, the second transport path $L_1$ includes a transport path $L_{1a}$ from the cargo handling initial position $A_1$ to the relay point $A_3$ and a transport path $L_{1b}$ from the relay point $A_3$ to the cargo handling target position $A_2$ as illustrated in FIG. 8, for example. The transport path $L_{1a}$ and the transport path $L_{1b}$ each are linear paths as with the first transport path.

More specifically, the method for deriving the relay point by the particle swarm optimization method of this embodiment generates the relay point $A_3$ and the second transport path by iteratively performing the calculation steps from Step S202 to S208 for a specified number of calculation steps or until the global best values have converged.

(Method for calculating maximum velocity)

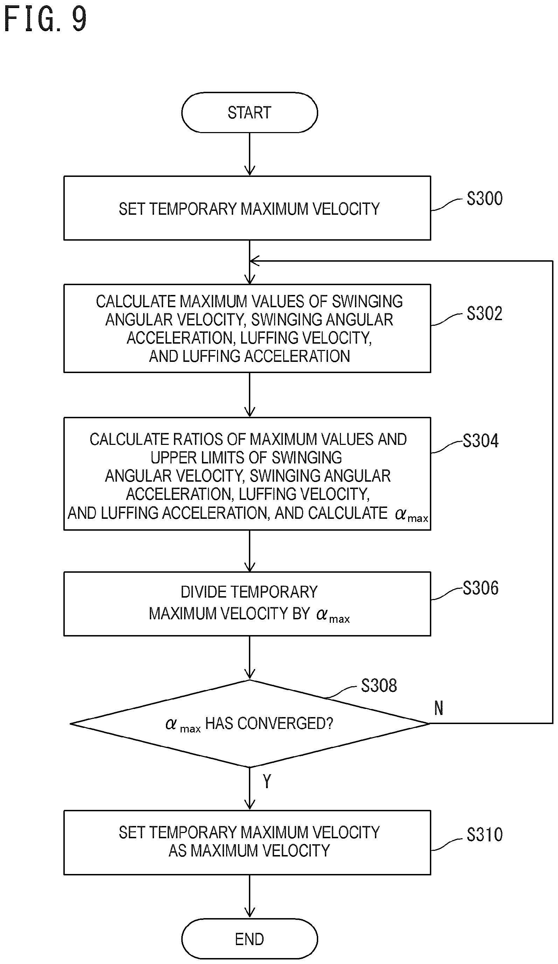

Next, a method for calculating the maximum velocities $v_{max}$, i.e., the first maximum velocity $v_{max1}$, the second maximum velocity $v_{max2}$, and the third maximum velocity $v_{max3}$, are described with reference to FIG. 9.

First, a temporary maximum transport velocity $v_{max0}$ is set for the linear transport path (S300). In this transport path, the position where the cargo handling is started is referred to as a start position and the position where the cargo handling ends is referred to as an end position. More specifically, when the first maximum velocity $v_{max1}$ is derived, the cargo handling initial position $A_1$ serves as the start position and the cargo handling target position $A_2$ serves as the end position. When the second maximum velocity $v_{max3}$ is derived, the cargo handling initial position $A_1$ serves as the start position and the relay point $A_3$ serves as the end position. When the third maximum velocity $v_{max3}$ is derived, the relay point $A_3$ serves as the start position and the cargo handling target position $A_2$ serves as the end position.

Subsequently, the maximum values $\omega_{max}$, $d\omega_{max}$, $dr_{max}$, and $d^2r_{max}$ of the swinging angular velocity $\omega_1$, the swinging angular acceleration $dw$, the luffing velocity $dr$, and the luffing acceleration $d^2r$, respectively, of the crane arm 2 in the transport from the start position to the end position are determined (S302).

Further, ratios $\alpha_1$, $\alpha_2$, $\alpha_3$, and $\alpha_4$ of the maximum values $\omega_{max}$, $d\omega_{max}$, $dr_{max}$, and $d^2r_{max}$ and upper values $\omega_{lim}$, $d\omega_{lim}$, $dr_{lim}$, and $d^2r_{lim}$ of the swinging angular velocity $\omega_1$, the swinging angular acceleration $dw$, the luffing velocity $dr$, and the luffing acceleration $d^2r$ are individually calculated using Expressions (21) to (24) below, respectively, (S304). Then, in Step S304, the largest ratio among the ratios $\alpha_1$, $\alpha_2$, $\alpha_3$, and $\alpha_4$ is defined as $\alpha_{max}$. The upper limit values $\omega_{lim}$, $d\omega_{lim}$, $dr_{lim}$, and $d^2r_{lim}$ are preset values from the facility specification of the cargo handling transport crane 1.

$$\alpha_1 = \omega_{max}/\omega_{lim} \cdots (21)$$

$$\alpha_2 = d\omega_{max}/d\omega_{lim} \cdots (22)$$

$$\alpha_3 \;=\; dr_{max}/dr_{lim} \quad \cdots (23)$$

$$\alpha_4 \;=\; d^2 r_{max}/d^2 r_{lim} \quad \cdots (24)$$

Thereafter, the temporary maximum velocity $v_{max0}$ is divided by $\alpha_{max}$ (S306).

Subsequently, it is determined whether $\alpha_{max}$ has converged to 1 (S308).

When it is determined in Step S308 that $\alpha_{max}$ has not converged to 1, the processing in and after Step S302 is repeated. In the processing in Step S302 on and after the second time, the calculation is performed using the value obtained by dividing the temporary maximum velocity $v_{max0}$ by $\alpha_{max}$ in the previous Step S306 as the temporary maximum velocity $v_{max0}$. More specifically, in this embodiment, the processing from Steps S302 to S306 is iteratively performed until $\alpha_{max}$ has converged to 1.

When it is determined in Step S308 that $\alpha_{max}$ has converged to 1, the used temporary maximum velocity $v_{max0}$ is set as the maximum velocity $v_{max}$ (S310).

By the steps above, the maximum velocity $v_{max}$ is derived. More specifically, in this embodiment, the maximum velocity $v_{max}$ is calculated based on the cargo handling initial position $A_1$, the cargo handling target position $A_2$, the range of the arm minimum swinging circle of the crane arm 2, the upper limit swinging angular velocity $\omega_{lim}$ of the crane arm 2, the upper limit swinging angular acceleration $d\omega_{lim}$ of the crane arm 2, the upper limit luffing velocity $dr_{lim}$ of the crane arm 2, and the upper limit luffing acceleration $d^2 r_{lim}$ of the crane arm 2.

Further, in this embodiment, by performing the iterative calculations using $\alpha_{max}$, the maximum velocity $v_{max}$ is calculated in which the maximum values of the swinging angular velocity $\omega_1$, the swinging angular acceleration $d\omega$, the luffing velocity $dr$, and the luffing acceleration $d^2 r$ of the crane arm 2 each are less than the upper limits.

As described above, according to this embodiment, by calculating the maximum velocity $v_{max}$ in the processing flow described in FIG. 9, the maximum velocity that the cargo handling transport crane 1 can take in the cargo handling transport path can be set as the maximum velocity $v_{max}$ during the steady rest transport, and the transport time can be shortened.

Further, according to this embodiment, the setting of the relay point $A_3$ enables the transport of the suspended cargo 7 in a linear cargo handling transport path even when a straight line path connecting the cargo handling initial position $A_1$ and the cargo handling target position $A_2$ is set as the cargo handling transport path, and the swinging radius of the cargo handling transport crane falls below the lower limit in the facility constraints in the middle of the path.

Further, according to this embodiment, the transport path in which the transport time is the shortest is set as the second transport path. Therefore, the transport time can be shortened as compared with a case where only the shortest path is set as the second transport path.

<Modification>

As described above, the present invention is described with reference to the specific embodiment, but it is not intended to limit the invention by these descriptions. Not only the disclosed embodiment but the other embodiments of the present invention including various modifications will be apparent to those skilled in the art by reference to the description of the present invention. Therefore, the embodiment of the invention described in Claims should be construed to cover embodiments including modifications thereof described in this specification alone or in combination.

For example, in the above-described embodiment, the steady rest control of the suspended cargo is performed by the velocity pattern control of the tip of the crane, but the present invention is not limited to such an example. Feedback control may be combined with the above-described velocity pattern control when the influence of disturbance due to wind or the like is large.

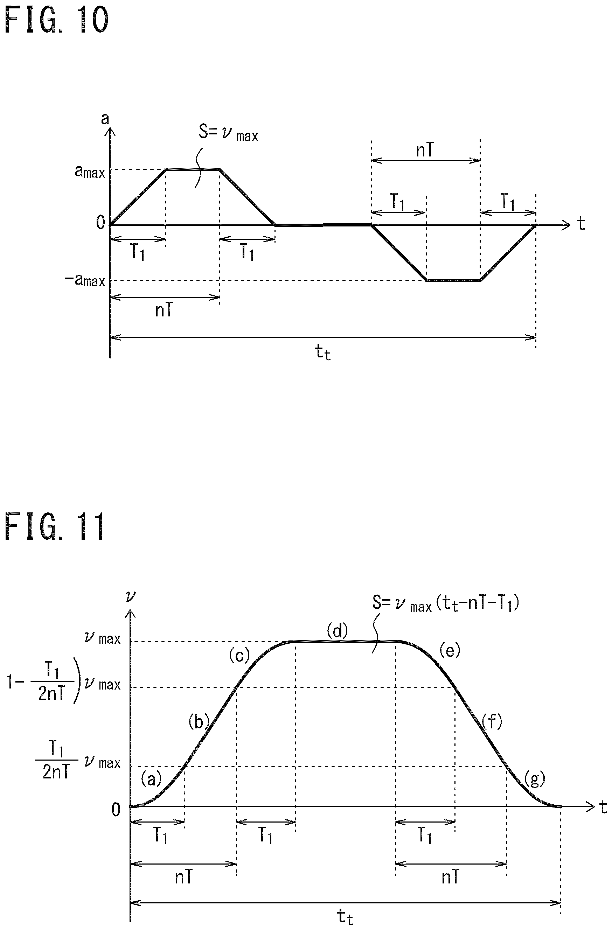

In the above-described embodiment, the velocity patterns of Expressions (1) to (7) are used, but the present invention is not limited to such an example. For example, acceleration patterns and velocity patterns illustrated in FIGS. 10 and 11, respectively, may be used. In this case, as illustrated in FIG. 10, first, an acceleration a is linearly raised at a rise time $T_1$ [s], which is a constant time. The rise time $T_1$ is a predetermined time during which the acceleration a is changed, and is preferably set as short as possible within the facility specification range. Next, the acceleration is performed over a time $(nT)$ that is n (natural number) times as long as the swing cycle T at the constant acceleration a. The transport time is preferably shorter, and therefore n = 1 is preferable when such a transport time can be realized in terms of a facility output. Further, the acceleration a is linearly reduced in the time $T_1$, and the transport at a constant speed is performed. Thus, the swing angle of the suspended cargo becomes 0 during the transport at the constant speed. Thereafter, when stopping, an operation reverse to the operation in the acceleration is performed, and the suspended cargo is stopped at the target position at the swing angle of 0.

When such control is performed, a velocity v of the arm tip portion 21 changes as illustrated in FIG. 11. In FIG.

11, $t_t$ is a transport time [s] of the suspended cargo, and the transport time $t_t$ is set such that an area S (integral value of the graph) of a region surrounded by the solid line indicating the velocity and a t-axis of the graph in FIG. 10 represented by Expression (25) below is the distance from the cargo handling initial position to the cargo handling target position. The velocity v of the arm tip portion 21 at each elapsed time t is represented by Expressions (26) to (32) below. Expression (26) indicates the velocity v of the arm tip portion 21 at a time when $t < T_1$ is established, Expression (27) indicates the same at a time when $T_1 \le t < nT$ is established, Expression (28) indicates the same at a time when $nT \le t < nT+T_1$ is established, Expression (29) indicates the same at a time when $nT+T_1 \le t < t_t-nT-T_1$ is established, Expression (30) indicates a time when $t_t-nT-T_1 \le t < t_t-nT$ is established, Expression (31) indicates the same at a time when $t_t-nT \le t < t_t-T_1$ is established, and Expression (32) indicates the same at an elapsed time when $t_t-T_1 \le t \le t_t$ is established.

[Expression 7]

$$S = v_{\max}(t_t - nT - T_1) \cdots (25)$$

$$v = \frac{v_{\max}}{2nTT_1}t^2 \cdots (26)$$

$$v = \frac{v_{\max}}{nT}(t - T_1) + \frac{v_{\max}T_1}{2nT} \cdots (27)$$

$$v = -\frac{v_{\max}}{2nTT_1}(t - nT - T_1)^2 + v_{\max} \cdots (28)$$

$$v = v_{\max} \cdots (29)$$

$$v = -\frac{v_{\max}}{2nTT_1}(t - t_t + nT + T_1)^2 + v_{\max} \cdots (30)$$

$$v = -\frac{v_{\max}}{nT}(t - t_t + T_1) + \frac{v_{\max}T_1}{2nT} \cdots (31)$$

$$v = \frac{v_{\max}}{2nTT_1}(t - t_t)^2 \cdots (32)$$

Further, in the above-described embodiment, it is determined whether the relay point $A_3$ is set by determining whether the number of the intersection points is 2 or more in the determination in Step S108, but the present invention is not limited to such an example. When it is clear that there is no necessity of setting the relay point $A_3$ in the cargo handling transport path, the first transport path is set as the cargo handling transport path, and the suspended cargo 7 may be transported in the velocity pattern according to the first maximum velocity $v_{\max}$.

In this embodiment, the entire cargo handling transport path is the straight line track, but the cargo handling transport path may partially include a part that is not a straight line track but a circular arc track.

Example 1

To evaluate the effects of the present invention, a path was generated in the same processing flow as that in the above-described embodiment, and the following test was performed using the cargo handling transport crane 1.

In Example 1, the steady rest control was performed in the cargo handling transport crane 1 illustrated in FIGS. 1 and 2. In Example 1, a 10 t hot-rolled coil suspended by the wire 6 having a length of 10 m was used as the suspended cargo 7, and a path in the case of transporting the suspended cargo from the coordinates (20, 0), which is the handling initial position $A_1$, to the coordinates (-20, 0), which is the cargo handling target position $A_2$, by a swinging crane having the swinging center at (0, 0) at the coordinates (x, y) [unit: m] was generated. The minimum swinging radius of the swinging crane was 11 m and the maximum swinging radius thereof was 45 m. The upper limits of the crane arm swinging angular velocity, the crane arm swinging angular acceleration, the crane arm luffing velocity, and the crane arm luffing acceleration of the swinging crane were 7.5 deg/s, 0.65 deg/s$^2$, 1.0 m/s, and 0.3 m/s$^2$, respectively.

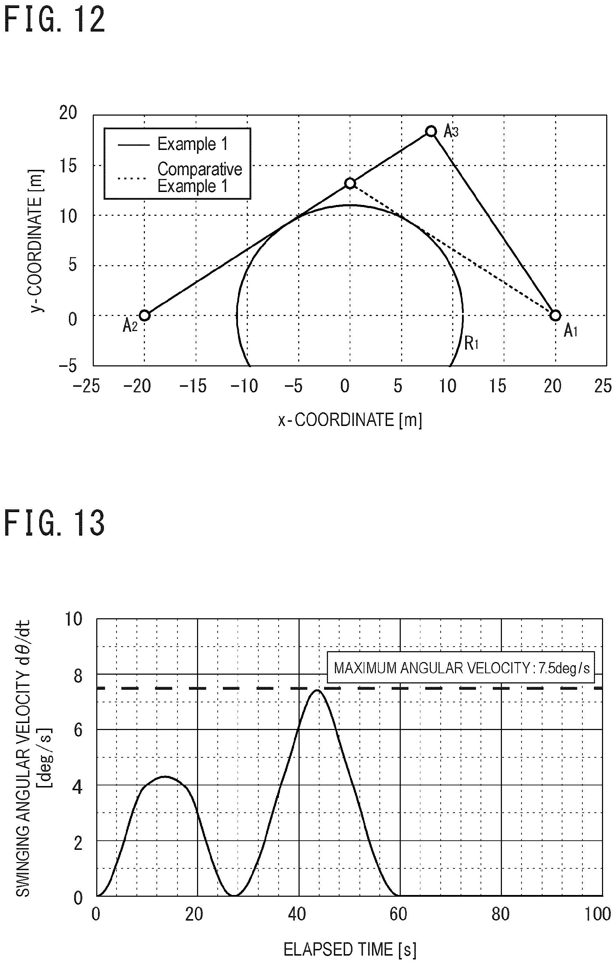

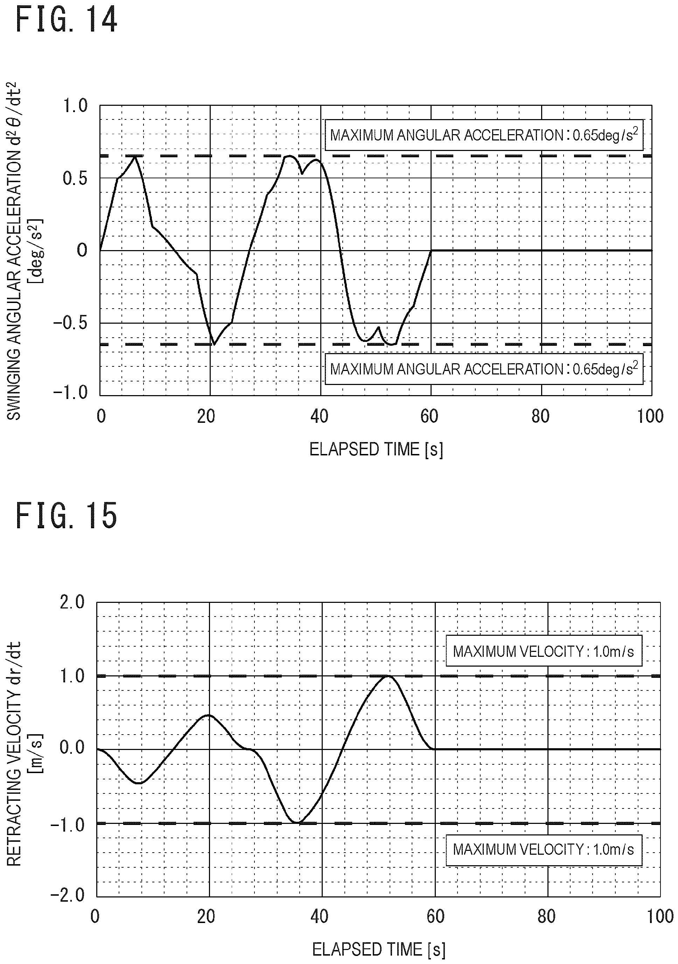

In Example 1, the coordinates of the relay point $A_3$ (7.9, 18.4) as illustrated in FIG. 12, the second maximum velocity $v_{\max1}$ = 1.25 m/s, and the third maximum velocity $v_{\max3}$ = 1.43 m/s were derived. The transport time at this time was 60.0 seconds. The values of the crane arm swinging angular velocity, the crane arm swinging angular acceleration, the crane arm luffing velocity, and the crane arm luffing acceleration are illustrated in FIGS. 13 to 16, respectively. As is clear from FIGS. 13 to 16, it was able to be confirmed that all the values fall within the upper limits.

Further, as illustrated in FIG. 12, the second maximum velocity $v_{max2}$, the third maximum velocity $v_{max3}$, and the transport time were derived when a relay point $A_{3a}$ having the coordinates of (0.0, 13.2) was taken to obtain the shortest route for comparison (Comparative Example 1). Both the second maximum velocity $v_{max3}$ and the third maximum velocity $v_{max3}$ decreased to 0.82 m/s to keep the swinging angular velocity and the like within the upper limits. In connection therewith, the transport time also became 77.0 seconds, resulting in an increase in the transport time as compared with Example 1. Thus, according to the cargo handling transport velocity, the cargo handling transport crane, and the cargo handling transport method of the above-described embodiment, it was found that the relay point $A_3$ and the transport velocity were able to be derived in which the transport time was the shortest within the specification limit of the cargo handling transport crane.

Example 2

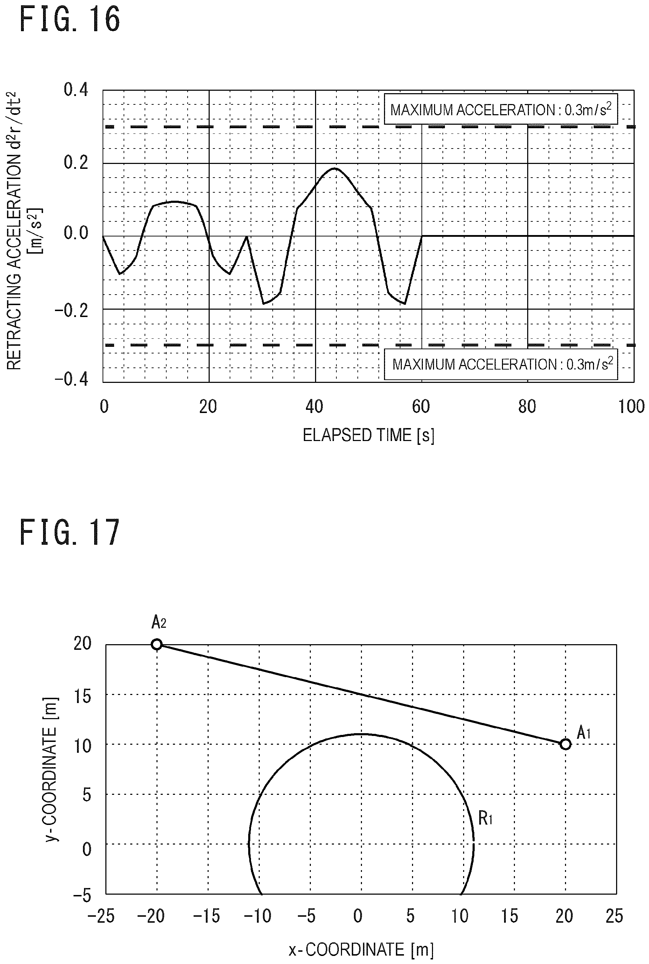

In Example 2, the transport velocity was derived for the first transport path not passing through the relay point $A_3$ from the cargo handling initial position $A_1$ at the coordinates (20, 10) to the cargo handling target position $A_2$ at the coordinates (-20, 20) as illustrated in FIG. 17 in the same cargo handling transport crane 1 as that in Example 1.

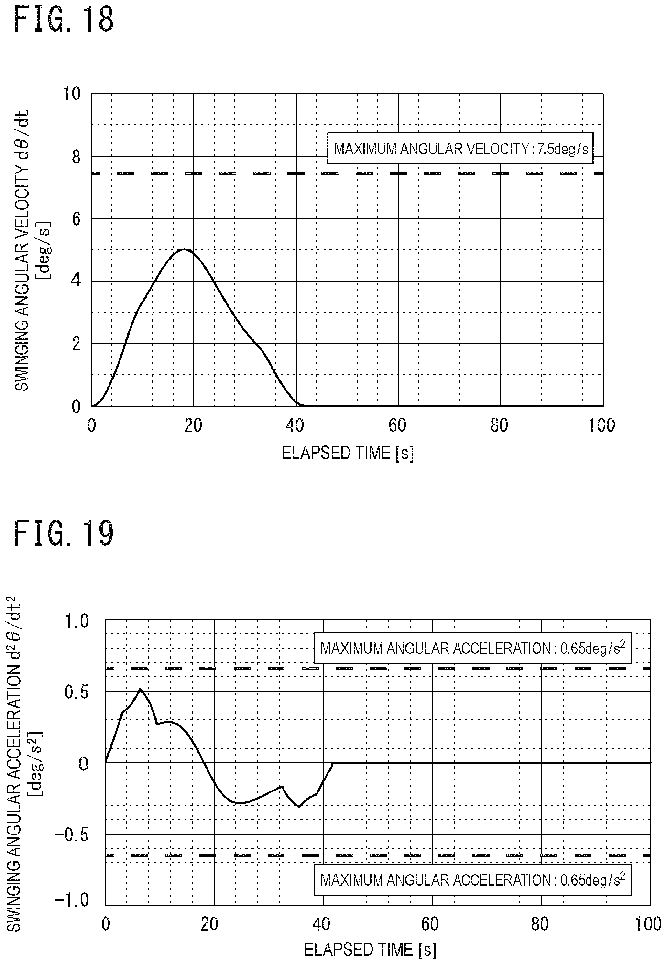

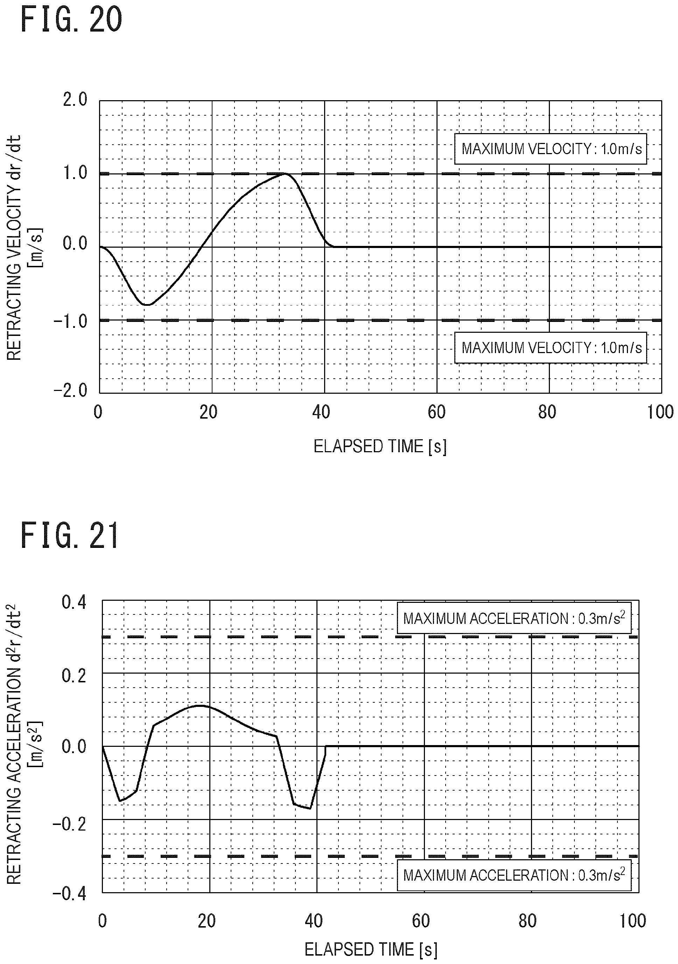

As a result of Example 2, the first maximum velocity $v_{max1}$ of 1.27 m/s was derived. The transport time at this time was 41.6 seconds. Further, values of the crane arm swinging angular velocity, the crane arm swinging angular acceleration, the crane arm luffing velocity, and the crane arm luffing acceleration in Example 2 are illustrated in FIGS. 18 to 22, respectively. As is clear from FIGS. 18 to 22, all the values fall within the upper limits. Thus, according to the cargo handling transport velocity, the cargo handling transport crane, and the cargo handling transport method of the above-described embodiment, it was able to be confirmed that, even in the case of the transport in the first transport path without passing through the relay point $A_3$ from the cargo handling initial position $A_1$ to the cargo handling target position $A_2$, the transport velocity was able to be derived in which the transport time is the shortest within the specification limit of the cargo handling transport crane 1.

Reference Signs List

1    cargo handling transport crane
2    crane arm
21   arm tip portion
3    arm luffing mechanism
4    arm swinging mechanism
5    arm extension mechanism
6    wire
7    suspended cargo

**Claims**

1. A method for generating a cargo handling transport path for generating a cargo handling transport path for transporting a suspended cargo suspended from an arm tip portion of a crane arm from an optional cargo handling initial position to an optional cargo handling target position by swinging movement of the crane arm,
   the method comprising:
   calculating the cargo handling transport path and a cargo handling transport velocity for transporting the suspended cargo in a straight line track as viewed from at least a vertical direction in at least a part of the cargo handling transport path based on the cargo handling initial position, the cargo handling target position, a range of an arm minimum swinging circle of the crane arm, an upper limit swinging angular velocity of the crane arm, an upper limit swinging angular acceleration of the crane arm, an upper limit luffing velocity of the crane arm, and an upper limit luffing acceleration of the crane arm.

2. The method for generating a cargo handling transport path according to claim 1 comprising:
   setting a relay point outside the arm minimum swinging circle, and generating the cargo handling transport path for transporting the suspended cargo from the cargo handling initial position to the cargo handling target position passing through the relay point.

3. The method for generating a cargo handling transport path according to claim 2, wherein the relay point is set at a position where a cargo handling transport time required for cargo handling from the cargo handling initial position to the cargo handling target position is the shortest by a particle swarm optimization method using the cargo handling transport time as an objective function.

4. The method for generating a cargo handling transport path according to claim 3, wherein the cargo handling transport time is calculated using a maximum velocity of the arm tip portion satisfying conditions that maximum values of the swinging angular velocity of the crane arm, the swinging angular acceleration of the crane arm, the luffing velocity of the crane arm, and the luffing acceleration of the crane arm are less than upper limits.

5. A cargo handling transport crane comprising:

   a crane arm configured to be able to perform swinging movement and have an arm tip portion from which a suspended cargo is suspended;
   an arm swinging mechanism configured to swing the crane arm;
   an arm luffing mechanism configured to adjust a luffing angle of the crane arm; and
   a control device configured to control the arm swinging mechanism and the arm luffing mechanism such that a track of the suspended cargo is a straight line track as viewed from at least a vertical direction in at least a part of a cargo handling transport path, wherein
   the control device generates the cargo handling transport path and a cargo handling transport velocity using the method for generating a cargo handling transport path according to any one of claims 1 to 4, and transports the suspended cargo based on the cargo handling transport path.

6. A cargo handling transport method comprising:
   transporting a suspended cargo using the cargo handling transport crane according to claim 5.

FIG. 1

FIG. 2

# FIG. 3

FIG. 4A

$$AREA = \nu_{max} = T \cdot a_{max}$$

FIG. 4B

$$AREA = \left(t_c - \frac{3}{2}T\right)\nu_{max}$$

# FIG. 5

```
                    START

                    │
                    ▼
          ┌──────────────────┐  ─── S100
          │  rmin ≦ d1 ≦ rmax │ ──── N ──────────────┐
          └──────────────────┘                       │
                    │                                 │
                    Y                                 │
                    ▼                                 │
          ┌──────────────────┐  ─── S102             │
          │  rmin ≦ d2 ≦ rmax │ ──── N ──────────────┤
          └──────────────────┘                       │
                    │                                 │
                    Y                                 ▼   S104
                    ▼                        ┌──────────────────┐
          ┌──────────────────┐ ─ S106       │      ERROR       │
          │    CALCULATE     │              │ (PATH FORMATION  │
          │ FIRST TRANSPORT  │              │  IS IMPOSSIBLE.) │
          │       PATH       │              └──────────────────┘
          └──────────────────┘
                    │
                    ▼
          ┌──────────────────┐  ─── S108
          │   NUMBER OF      │
          │ INTERSECTION     │── N ──┐       S110
          │ POINTS IS        │       │
          │ 2 OR MORE?       │       ▼
          └──────────────────┘   ┌──────────────────────┐
                    │            │ DETERMINE FIRST       │
                    Y            │ TRANSPORT PATH AS      │
                    ▼            │ CARGO HANDLING         │
          ┌──────────────────┐  │ TRANSPORT PATH         │
          │ CALCULATE RELAY  │  └──────────────────────┘
          │ POINT AND SECOND │ ─ S114      │      S112
          │ TRANSPORT PATH   │             ▼
          └──────────────────┘  ┌──────────────────────┐
                    │           │     CALCULATE        │
                    ▼           │ FIRST MAXIMUM VELOCITY│
          ┌──────────────────┐  └──────────────────────┘
          │ DETERMINE SECOND │             │
          │ TRANSPORT PATH   │ ─ S116      │
          │ AS CARGO         │             │
          │ HANDLING         │             │
          │ TRANSPORT PATH   │             │
          └──────────────────┘             │
                    │                       │
                    ▼◄──────────────────────┘
                    
                    END
```

# FIG. 6

FIG. 7

START

SCATTER PARTICLE WARMS OF INITIAL POSITION, INITIAL VELOCITY — S200

UPDATE POSITION OF EACH PARTICLE — S202

CALCULATE TRANSPORT TIME, AND UPDATE PERSONAL BEST VALUES — S204

UPDATE GLOBAL BEST VALUES — S206

UPDATE VELOCITY OF EACH PARTICLE — S208

NUMBER OF TIMES OF ITERATIVE CALCULATIONS HAS REACHED UPPER LIMIT NUMBER OF TIMES? — S210

Y

N

GLOBAL BEST VALUES HAVES CONVERGED? — S212

N

Y

ADOPT GLOBAL BEST VALUES AFTER CONVERGED FOR RELAY POINT — S214

END

FIG. 8

# FIG. 9

```
          ( START )
              │
              ▼
┌─────────────────────────────────┐
│  SET TEMPORARY MAXIMUM VELOCITY │──── S300
└─────────────────────────────────┘
              │
              ▼ ◄──────────────────────────────┐
┌─────────────────────────────────┐            │
│  CALCULATE MAXIMUM VALUES OF     │            │
│  SWINGING ANGULAR VELOCITY,      │──── S302   │
│  SWINGING ANGULAR ACCELERATION,  │            │
│  LUFFING VELOCITY,               │            │
│  AND LUFFING ACCELERATION        │            │
└─────────────────────────────────┘            │
              │                                 │
              ▼                                 │
┌─────────────────────────────────┐            │
│ CALCULATE RATIOS OF MAXIMUM      │            │
│ VALUES AND UPPER LIMITS OF       │            │
│ SWINGING ANGULAR VELOCITY,       │──── S304   │
│ SWINGING ANGULAR ACCELERATION,   │            │
│ LUFFING VELOCITY, AND LUFFING    │            │
│ ACCELERATION, AND CALCULATE      │            │
│ $\alpha_{max}$                   │            │
└─────────────────────────────────┘            │
              │                                 │
              ▼                                 │
┌─────────────────────────────────┐            │
│  DIVIDE TEMPORARY                │──── S306   │
│  MAXIMUM VELOCITY BY $\alpha_{max}$│          │
└─────────────────────────────────┘            │
              │                                 │
              ▼         S308                    │
           ╱─────────────────────╲      N       │
          ╱  $\alpha_{max}$ HAS    ╲────────────┘
          ╲  CONVERGED?            ╱
           ╲─────────────────────╱
              │ Y
              ▼
┌─────────────────────────────────┐
│  SET TEMPORARY MAXIMUM VELOCITY  │──── S310
│  AS MAXIMUM VELOCITY             │
└─────────────────────────────────┘
              │
              ▼
           ( END )
```

FIG. 10

FIG. 11

# FIG. 12

# FIG. 13

## FIG. 14

## FIG. 15

# FIG. 16

MAXIMUM ACCELERATION : 0.3m/s²

MAXIMUM ACCELERATION : 0.3m/s²

RETRACTING ACCELERATION d²r/dt²
[m/s²]

ELAPSED TIME [s]

# FIG. 17

y-COORDINATE [m]

x-COORDINATE [m]

## FIG. 18

## FIG. 19

FIG. 20

FIG. 21

## INTERNATIONAL SEARCH REPORT

| International application No. |
|---|
| **PCT/JP2021/030820** |

**A.    CLASSIFICATION OF SUBJECT MATTER**

***B66C 13/48***(2006.01)i
FI:   B66C13/48 G

According to International Patent Classification (IPC) or to both national classification and IPC

**B.    FIELDS SEARCHED**

Minimum documentation searched (classification system followed by classification symbols)

B66C13/48, B66C23/88

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2018-95369 A (TADANO LTD.) 21 June 2018 (2018-06-21) paragraphs [0019]-[0104], fig. 1-9 | 1-6 |
| X | JP 2020-132315 A (TADANO LTD.) 31 August 2020 (2020-08-31) paragraphs [0018]-[0062], fig. 1-12 | 1-6 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 October 2021** | **09 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/030820**

| Patent document cited in search report | Publication date (day/month/year) | Patent family member(s) | Publication date (day/month/year) |
|---|---|---|---|
| JP 2018-95369 A | 21 June 2018 | (Family: none) | |
| JP 2020-132315 A | 31 August 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019112178 A

**Non-patent literature cited in the description**

- Automation of Overhead Traveling Cranes. **OKAWA et al.** NKK Technical Report. 1995